# EUROPEAN PATENT SPECIFICATION

(11) **EP 2 833 063 B1**
(45) Date of publication and mention of the grant of the patent: **10.05.2017**
(21) Application number: 13768573.1
(22) Date of filing: 14.03.2013
(51) Int. Cl.: F23K 5/00, B63H 21/38, F23K 5/02

(54) **MARINE VESSEL, FUEL-SUPPLYING DEVICE, AND METHOD FOR SUPPLYING LIQUEFIED FUEL GAS TO MAIN ENGINE FOR PROPULSION**
WASSERFAHRZEUG, TREIBSTOFFZUFUHRVORRICHTUNG UND VERFAHREN ZUR ZUFUHR VON FLÜSSIGTREIBGAS AN EINEN HAUPTMOTOR FÜR DEN ANTRIEB
NAVIRE, DISPOSITIF D'ALIMENTATION EN CARBURANT, ET PROCÉDÉ POUR FOURNIR DU GAZ COMBUSTIBLE LIQUÉFIÉ À UN MOTEUR PRINCIPAL POUR LA PROPULSION

(30) Priority: 30.03.2012 JP 2012081012
(43) Date of publication of application: 04.02.2015
(73) Proprietor: Mitsubishi Heavy Industries, Ltd., Tokyo 108-8215 (JP)
(72) Inventor: ISHIDA, Toshinori, Tokyo 108-8215 (JP); HIRAOKA, Kazuyoshi, Tokyo 108-8215 (JP); NAKAMURA, Ryuta, Tokyo 108-8215 (JP)
(74) Representative: Henkel, Breuer & Partner
(86) International application number: PCT/JP2013/057265
(87) International publication number: WO 2013/146314

(56) References cited:
- DE-A1- 10 245 161
- DE-A1-102004 011 414
- DE-U1- 20 101 475
- JP-A- H06 336 193
- JP-A- 2003 227 608
- JP-A- 2006 177 618
- JP-A- 2010 223 424
- US-A- 2 767 691

## Description

### Technical Field

The present invention relates to a marine vessel, a fuel supply apparatus, and a method for supplying fuel gas of liquefied medium to a main engine for marine vessel propulsion.

### Background Art

In marine vessels, heavy oil has been widely used as a fuel, but there has been a demand for suppressing a sulfur component contained in exhaust gas after the combustion of the fuel from the viewpoint of environmental protection. Therefore, active efforts are being made to switch the fuel from heavy oil to liquefied gas containing no sulfur component.

Meanwhile, in a liquefied natural gas (LNG) carrier, LNG loaded as a cargo is used as a fuel for a steam turbine main engine for carrier propulsion (hereinafter, simply referred to as main engine).

However, it is stipulated by Class rule that, if there is any problem with the supply of the fuel when LNG is used as a fuel, the fuel is supposed to be switched to heavy oil or light oil.

Therefore, there has been a proposal for a configuration in which not only LNG but also heavy oil or light oil are used as the fuel, and LNG and heavy oil or light oil are appropriately switched depending on a variety of conditions (for example, refer to JP 2006-177618A). A further example of such a system is shown in US-2767691.

### Summary of Invention

### Technical Problem

However, in a state in which LNG is supplied as a fuel for the main engine, the supply amount and supply pressure of LNG decrease in a state of a low-load navigation in which the navigation speed is decreased to bring a marine vessel into a port compared with a state in ocean going. In addition, when the load on the main engine for marine vessel propulsion significantly changes due to the acceleration and deceleration of a marine vessel in a port or the like, there is a concern of the main engine trip in a case in which only LNG is used as the fuel. Therefore, in the port, a marine vessel navigates in a switched state in which LNG and heavy oil or light oil are co-combusted as the fuel.

In a case in which the fuel is switched to heavy oil or light oil from LNG, a burner for LNG and a burner for heavy oil or light oil are separately provided, and the burner for heavy oil or light oil is ignited using the combustion flame of the burner for LNG. At this time, since the supply amount and supply pressure of LNG are low in the low-load navigation state, the combustion flame is small, and there is a possibility of a failure of ignition. Therefore, when the fuel is switched to heavy oil or light oil from LNG, the pressure of LNG is increased in advance to a pressure of, for example, 10 kPaG using a compressor.

The increase in the pressure of LNG as described above is carried out while monitoring the load state and the like of the main engine in a control apparatus of the main engine.

Therefore, for example, in a case in which a marine vessel comes into the low-load navigation state by decreasing the navigation speed when coming into a port, in the control apparatus of the main engine, the pressure of LNG is increased by operating the compressor, and the flame of a gas burner is intensified so as to make the switching of the fuel from the single fuel combustion of LNG to the co-combustion with heavy oil or light oil possible at all times.

However, in the above-described example, LNG used to intensify the flame of the gas burner by increasing the pressure until the fuel is actually switched to the co-combustion with heavy oil or light oil is not effectively used, and the LNG fuel is uselessly consumed. Additionally, vapor generated from the combustion of the fuel is not effectively used, and is uselessly exhausted.

The invention has been made in consideration of the above-described circumstances, and an object of the invention is to provide a marine vessel, a fuel supply apparatus, and a method for supplying fuel gas of liquefied medium to a main engine for marine vessel propulsion which are capable of reliably switching the fuel from LNG to the co-combustion with heavy oil or light oil by suppressing the useless consumption of the fuel.

### Solution to Problem

To solve the above-described problems, the invention provides a fuel supply apparatus as defined by claim 1, a marine vessel as defined by claim 8, a method for navigating the marine vessel as defined by claim 9, and a method for driving the marine vessel as defined by claim 10.

That is, according to a first aspect of the invention, there is provided a marine vessel including a main engine for marine vessel propulsion capable of selectively using fuel gas of LNG and fuel oil as a fuel, a gas supply line supplying the fuel gas of LNG to the main engine for propulsion, a fuel oil supply line supplying the fuel oil to the main engine for propulsion, pressure-increasing means for increasing a pressure of the fuel gas of LNG in the gas supply line, a supply pressure-adjusting valve adjusting a supply pressure when supplying the fuel gas of LNG in the gas supply line to the main engine for propulsion, and a control apparatus increasing the pressure of the fuel gas of LNG using the pressure-increasing means depending on a load on the main engine for marine vessel propulsion and opening the supply pressure-adjusting valve so as to supply the fuel gas of LNG pressurized to a predetermined pressure to the main engine for propulsion before a state in which the fuel gas of LNG is supplied to the main engine for marine vessel propulsion from the gas supply line is transferred to a state in which the fuel oil is supplied to the main engine for marine vessel propulsion from the fuel oil supply line.

According to the first aspect, when the state in which the fuel gas of LNG is supplied to the main engine for marine vessel propulsion from the gas supply line is transferred to the state in which the fuel oil is supplied to the main engine for marine vessel propulsion from the fuel oil supply line, if the supply pressure-adjusting valve is opened, since the fuel gas of LNG on the upper stream side of the supply pressure-adjusting valve is in a pressurized state, it is possible to instantly enlarge the flame of the fuel gas of LNG in the main engine for propulsion. Therefore, reliable ignition can be carried out.

Furthermore, since the fuel gas of LNG is all in a pressurized state on the upper stream side of the supply pressure-adjusting valve, and the fuel gas of LNG depressurized using the supply pressure-adjusting valve is supplied to the main engine for marine vessel propulsion until the fuel gas of LNG is switched to the fuel oil, it is possible to suppress the useless consumption of the fuel gas of liquefied medium.

Any configuration may be used as the pressure-increasing means, and, for example, it is possible to further include a compressor being provided on an upper stream side of the supply pressure-adjusting valve and pressurizing the fuel gas of LNG flowing in the gas supply line, and a circulation line circulating the fuel gas of LNG to the upper stream of the compressor from a branching section between the compressor and the supply pressure-adjusting valve.

When the fuel gas of LNG is circulated on the upper stream side of the supply pressure-adjusting valve as described above, it is possible to put the fuel gas of LNG into a pressurized state without uselessly consuming the fuel gas of liquefied medium.

At this time, a line pressure-adjusting valve adjusting the pressure of the fuel gas of LNG in the gas supply line is preferably provided in the circulation line.

Meanwhile, when the fuel gas of LNG is circulated as described above, the fuel gas of LNG passes through the compressor several times, and consequently the temperature of the fuel gas of LNG increases.

Therefore, cooling means for cooling the fuel gas of LNG flowing in the gas supply line is preferably further provided. Examples of the cooling means include the blowing of LNG to the gas-state fuel gas of liquefied medium. Needless to say, other methods may be used.

In addition, it is preferable to provide the pressure-increasing means on the upper stream side of the supply pressure-adjusting valve, and to provide an evaporator increasing the pressure of the fuel gas of LNG flowing in the gas supply line.

As the pressure-increasing means, additionally, it is possible to gasify LNG extracted from a tank containing LNG through evaporation and supply the gasified. LNG to the gas supply line. Specifically, it is possible to use a vaporizer. Therefore, the fuel gas of LNG can be pressurized without using the compressor.

The control apparatus is capable of not carrying out the pressurization of the fuel gas of LNG using the circulation line or the evaporator in the pressure-increasing means when the load on the main engine for marine vessel propulsion is at a first level and carrying out the pressurization of the fuel gas of LNG using the circulation line or the pressure-increasing means including the evaporator before the state in which the fuel gas of LNG is supplied to the main engine for marine vessel propulsion from the gas supply line is transferred to the state in which the fuel oil is supplied to the main engine for marine vessel propulsion from the fuel oil supply line when the load on the main engine for marine vessel propulsion is at a second level that is lower than the first level.

According to a second aspect of the invention, there is provided a fuel supply apparatus supplying a fuel gas of LNG to the main engine for marine vessel propulsion capable of selectively using the fuel gas of LNG and a fuel oil as a fuel, including a gas supply line supplying the fuel gas of LNG to the main engine for propulsion, pressure-increasing means for increasing a pressure of the fuel gas of LNG in the gas supply line, a supply pressure-adjusting valve adjusting a supply pressure when supplying the fuel gas of LNG in the gas supply line to the main engine for propulsion, and a control apparatus increasing the pressure of the fuel gas of LNG using the pressure-increasing means depending on a load on the main engine for marine vessel propulsion and opening the supply pressure-adjusting valve so as to supply the pressurized fuel gas of LNG to the main engine for propulsion before a state in which the fuel gas of LNG is supplied to the main engine for marine vessel propulsion from the gas supply line is transferred to a state in which the fuel oil is supplied to the main engine for marine vessel propulsion from the fuel oil supply line.

According to a third aspect of the invention, there is provided a method for navigating the above-described marine vessel, including a step of increasing a pressure of the fuel gas of LNG depending on a load on the main engine for marine vessel propulsion using pressure-increasing means when a state in which the fuel gas of LNG is supplied to the main engine for marine vessel propulsion from the gas supply line is transferred to a state in which the fuel oil is supplied to the main engine for marine vessel propulsion from the fuel oil supply line, and a step of opening the supply pressure-adjusting valve so as to supply the pressurized fuel gas of LNG to the main engine for propulsion and igniting the fuel oil using a flame of the fuel gas of LNG.

In addition, according to a fourth aspect of the invention, there is provided a method for driving the above-described marine vessel, in which a pressure of the fuel gas of LNG located on the upper stream side of the supply pressure-adjusting valve in the gas supply line is previously increased, and the pressurized fuel gas of LNG is supplied to the main engine for propulsion. Advantageous Effects of Invention

When the state in which the fuel gas of LNG is supplied to the main engine for marine vessel propulsion from the gas supply line is transferred to the state in which the fuel oil is supplied to the main engine for marine vessel propulsion from the fuel oil supply line, if the supply pressure-adjusting valve is opened, since the fuel gas of LNG on the upper stream side of the supply pressure-adjusting valve is in a pressurized state, it is possible to instantly enlarge the flame of the fuel gas of LNG in the main engine for propulsion. Therefore, reliable ignition can be carried out.

Furthermore, since the fuel gas of LNG is all in a pressurized state on the upper stream side of the supply pressure-adjusting valve, and the fuel gas of LNG depressurized using the supply pressure-adjusting valve is supplied to the main engine for marine vessel propulsion until the fuel gas of LNG is switched to the fuel oil, it is possible to suppress the useless consumption of the fuel gas of LNG.

As a result, it is possible to suppress the useless fuel consumption and to reliably switch the fuel from LNG to heavy oil or light oil.

### Brief Description of Drawings

Fig. 1 is a block diagram schematically illustrating an entire configuration of a fuel supply apparatus according to a first embodiment of the invention.
Fig. 2 is a block diagram schematically illustrating an entire configuration of a fuel supply apparatus according to a second embodiment of the invention. Description of Embodiments

Hereinafter, embodiments of the marine vessel, the fuel supply apparatus, and the supply method according to the invention, the method in a case in which, for example, liquefied natural gas (LNG) is used as fuel gas for a main engine for marine vessel propulsion will be described with reference to the accompanying drawings.

### [First embodiment]

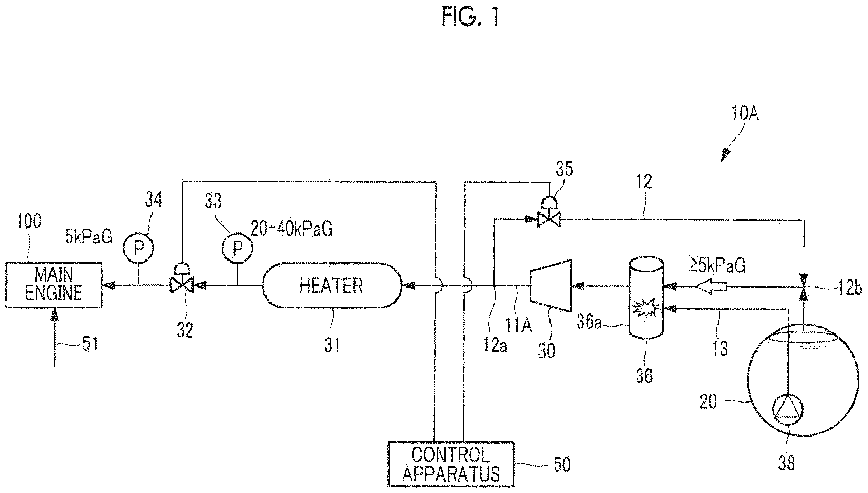

Hereinafter, a first embodiment of the invention will be described using Fig. 1.

Fig. 1 is a block diagram schematically illustrating an entire configuration of a fuel supply apparatus 10A supplying a fuel to a steam turbine-type main engine (main engine for propulsion) 100 provided in an LNG vessel. The fuel supply apparatus 10A includes a cargo tank 20 storing LNG, an LNG supply line (gas supply line) 11A supplying the boil-off gas of LNG generated in the cargo tank 20 to a boiler (not illustrated) in the main engine 100, and a fuel oil supply line 51 supplying heavy oil or light oil (fuel oil) to the boiler (not illustrated) in the main engine 100 from a fuel tank (not illustrated).

A compressor 30, a heater 31, and a supply pressure-adjusting valve 32 are provided in the supply line 11A for fuel gas of LNG in a boil-off gas-flowing direction.

The compressor 30 is one of pressure-increasing means for increasing the pressure and temperature of the boil-off gas in the supply line 11A for fuel gas of LNG and supplying the boil-off gas to the downstream side.

The heater 31 increases the temperature of the fuel gas of LNG being supplied to the boiler in the main engine 100.

The supply pressure-adjusting valve 32 adjusts the flow rate and pressure of the fuel gas of LNG being supplied to the boiler in the main engine 100, and pressure meters 33 and 34 are provided on the inlet and outlet sides of the supply pressure-adjusting valve respectively. The degree of opening of the supply pressure-adjusting valve 32 is controlled using a control apparatus 50 while monitoring the detection values of the pressure meters 33 and 34.

In the supply line 11A for fuel gas of LNG, a return line (circulation line) 12 that is one of pressure-increasing means is provided in series between a branching section 12a located on the downstream side of the compressor 30 and on the upper stream side of the heater 31 and a convergence section 12b located on the upper stream side of the compressor 30 and on the outlet side of the cargo tank 20.

A line pressure control valve 35 adjusting the gas pressure on the upper stream side of the supply pressure-adjusting valve 32 in the supply line 11A for fuel gas of LNG is provided in the return line 12, and the opening/closing and degree of opening of the line pressure control valve are controlled using the control apparatus 50.

In the return line 12, excess gas determined depending on the gas pressure on the upper stream side of the supply pressure-adjusting valve 32 that is determined depending on the degree of opening of the supply pressure-adjusting valve 32 is circulated to the convergence section 12b on the outlet side of the cargo tank 20 from the branching section 12a on the downstream side of the compressor 30.

In the supply line 11A for fuel gas of LNG, a mist separator 36 (cooling means) is provided on the downstream side of the convergence section 12b in the return line 12 and on the upper stream side of the compressor 30. The mist separator 36 collects a liquid-phase component of LNG contained in the mixture of the boil-off gas of LNG stored in the cargo tank 20 and the excess gas returned from the downstream side of the compressor 30 when the mixture is cooled by LNG spraying before or in the mist separator.

Before or in the mist separator 36, a spray nozzle (not illustrated) for cooling the boil-off gas in the supply line 11A for fuel gas of LNG is provided in a container 36a. A pump 38 submerged in a liquid phase in the cargo tank 20 feeds the LNG to the spray nozzle through a LNG supply line 13. Therefore, it becomes possible to blow liquid LNG pumped up from the inside of the cargo tank 20 using the pump 38 to the mixture of the boil-off gas and the excess gas returned from the compressor 30 in the container 36a from the spray nozzle through the LNG supply line 13.

The main engine 100 is capable of selectively using as a fuel the boil-off gas being supplied from the supply line 11A for fuel gas of LNG and heavy oil or light oil being supplied from the fuel oil supply line 51 depending on navigation, the driving state, and the like. That is, the load state of the main engine 100 is detected based on the operation mode selected by the marine vessel operator, a variety of monitoring values monitored using a variety of sensors, and the like, and the control apparatus 50 controls the switching between the supply of the boil-off gas from the supply line 11A for fuel gas of LNG and the supply of heavy oil or light oil from the fuel oil supply line 51 to the main engine 100 depending on the detected load state of the main engine 100 based on the predetermined computer program.

### (Navigation mode through the single fuel combustion of LNG)

In a case ocean going, the boil-off gas is supplied to the main engine 100 as a fuel. In this case, in the fuel supply apparatus 10A, the boil-off gas generated in the cargo tank 20 is supplied to the supply line 11A for fuel gas of LNG. The boil-off gas of LNG is sent to the compressor 30 after the liquid-phase component contained in the gas is removed in the mist separator 36.

The pressure and temperature of the boil-off gas of LNG are increased in the compressor 30, and the temperature of the boil-off gas of LNG is further increased in the heater 31.

In addition, the boil-off gas is sent to the main engine 100 as a fuel after the flow rate and pressure of the boil-off gas of LNG are adjusted in the supply pressure-adjusting valve 32.

Meanwhile, in this mode, the line pressure control valve 35 is closed, and the boil-off gas of LNG is not circulated through the return line 12.

### (Navigation mode through the co-combustion of LNG and heavy oil or light oil)

In a case in which a marine vessel navigates in a port at a low speed, the marine vessel navigates in a co-combustion state of the boil-off gas of LNG and heavy oil or light oil. Specifically, heavy oil or light oil is supplied to the main engine 100 from the fuel tank (not illustrated) through the fuel oil supply line 51 together with the boil-off gas of LNG being supplied through the supply line 11A for fuel gas of LNG. Meanwhile, any configuration may be used for the supply of heavy oil or light oil, and the configuration will not be described in detail.

### (Low-load navigation state)

In a state in which a marine vessel comes into a port from outside and is in an navigation mode using only LNG, when the load on the main engine 100 turns from a normal navigation state (first level) into a low-load navigation state (second level) in which the navigation speed is decreased so that the load on the main engine 100 is lower than the load in the normal navigation state, the pressure of the boil-off gas of LNG is controlled to be increased in the supply line 11A for fuel gas of LNG before the navigation mode using only LNG is switched to a navigation mode through the co-combustion of LNG and heavy oil or light oil.

For the control of increasing the pressure of the boil-off gas of LNG, the navigation speed, the pressure of the supply gas to the main engine 100 at the pressure meter 34, and the like are monitored in the control apparatus 50, and, when the navigation speed, the pressure and the like are detected to be lower than the previously-specified threshold values, the supply pressure-adjusting valve 32 is squeezed. Then, the pressure of the boil-off gas of LNG in the supply line 11A for fuel gas of LNG is increased. At this time, the pressure of the boil-off gas of LNG in the supply line 11A for fuel gas of LNG is desirably set in a range of, for example, 10 kPaG to 40 kPaG. In this state, the pressure on the downstream side of the supply pressure-adjusting valve 32, that is, the pressure of gas being supplied to the main engine 100 is set to, for example, 5 kPaG.

In addition, when a navigation mode in which the boil-off gas of LNG is supplied to the main engine 100 from the supply line 11A for fuel gas of LNG is transferred to a navigation mode in which heavy oil or light oil is supplied to the main engine 100 from the fuel oil supply line 51 together with the boil-off gas of LNG, in the control apparatus 50, as soon as a signal indicating the fact that the switching operation of the navigation mode has been completed is received, the supply pressure-adjusting valve 32 is opened. Then, since gas pressure in the supply line 11A for fuel gas of LNG on the upper stream side of the supply pressure-adjusting valve 32 is increased to a pressure in a range of 10 kPaG to 40 kPaG, the pressure of the boil-off gas of LNG being supplied to the main engine 100 is instantly increased, and it is possible to form a large combustion flame from the burner in the boiler. Then, it is possible to reliably ignite the burner for heavy oil or light oil and to reliably switch fuels.

At this time, together with the above-described squeezing operation of the supply pressure-adjusting valve 32, the line pressure control valve 35 is opened. Then, excess boil-off gas of LNG is circulated to the upper stream side of the compressor 30 through the return line 12 in a state in which the supply pressure-adjusting valve 32 is squeezed, the boil-off gas of LNG is not uselessly consumed.

As described above, the boil-off gas of LNG being circulated through the return line 12 is pressurized using the compressor 30, whereby the temperature of the boil-off gas of LNG increases. Therefore, when the circulation is repeated, the temperature of boil-off gas of LNG in the supply line 11A for fuel gas of LNG gradually increases. Therefore, it is possible to decrease the temperature of the boil-off gas of LNG by blowing the LNG in the cargo tank 20 to the boil-off gas of LNG from the spray nozzle before or in the mist separator 36, and a stable operation can be carried out.

According to the above-described configuration, it is possible to suppress the useless consumption of the fuel and to reliably switch the fuel from LNG to heavy oil or light oil.

In addition, since only the minimum extent of modification such as the additional provision of the return line 12, the line pressure control valve 35 and the like, and the change in the control program for the control apparatus 50 is required for the existing marine vessels, it is possible to obtain the above-described effects at a low cost.

### [Second embodiment]

Next, a second embodiment of the invention will be described. In the following description, the same components as the component described in the first embodiment are given the same reference sign, and will not be described again.

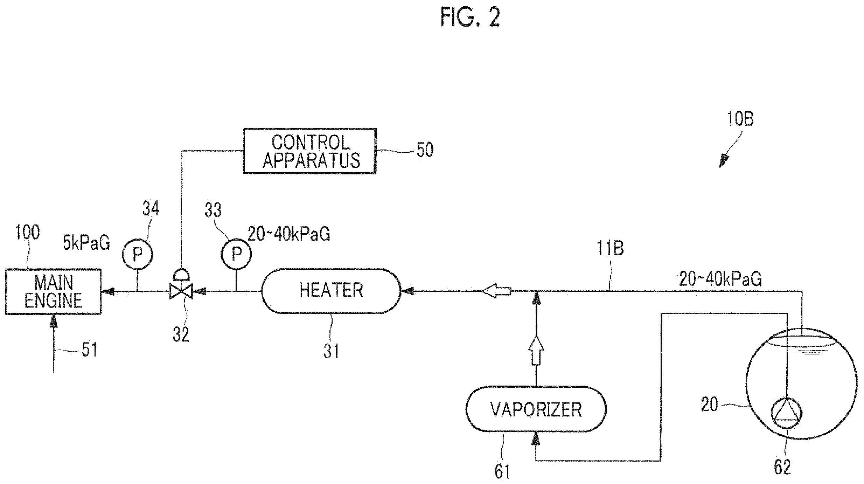

As illustrated in Fig. 2, a fuel supply apparatus 10B in the embodiment includes the cargo tank 20 storing LNG, a supply line (gas supply line) 11B supplying the boil-off gas of LNG generated in the cargo tank 20 to the boiler (not illustrated) in the main engine 100, and the fuel oil supply line 51.

The heater 31 and the supply pressure-adjusting valve 32 are provided in the supply line 11B for fuel gas of LNG in a boil-off gas-flowing direction.

An evaporator (pressure-increasing means) 61 evaporating the LNG pumped up using a pump 62 submerged in the liquid phase in the cargo tank 20 by pressurizing and heating the LNG is connected to the supply line 11B for fuel gas of LNG on the upper stream side of the heater 31. The evaporator 61 employs a heating method using steam vapor or hot water.

Gas of LNG obtained by heating the LNG using the evaporator 61 is converged with the boil-off gas in the supply line 11B for fuel gas of LNG on the upper stream side of the heater 31. Furthermore, for example, a vaporizer can be used as the evaporator.

Similar to the first embodiment, the main engine 100 is capable of selectively using as a fuel the boil-off gas of LNG being supplied from the supply line 11B for fuel gas of LNG and heavy oil or light oil being supplied from the fuel oil supply line 51 depending on navigation, the driving state, and the like.

In the above-described configuration, when the normal navigation state is turned into the low-load navigation state by decreasing the navigation speed in a state of the navigation mode using only LNG, the pressure of the boil-off gas of LNG is controlled to be increased in the supply line 11B for fuel gas of LNG before the navigation mode using only LNG is switched to the navigation mode in which heavy oil or light oil is used.

For the control of increasing the pressure of the boil-off gas of LNG, the navigation speed, the pressure of the supply gas to the main engine 100 at the pressure meter 34, and the like are monitored in the control apparatus 50, and, when the navigation speed, the pressure and the like are detected to be lower than the previously-specified threshold values, the vaporizer 61 is operated. Then, the gas of LNG obtained through heating using the vaporizer 61 is converged with the boil-off gas of LNG in the supply line 11B for fuel gas of LNG on the upper stream side of the heater 31. Therefore, the pressure of the boil-off gas of LNG is increased. At this time, the pressure of the boil-off gas of LNG in the supply line 11B for fuel gas of LNG is desirably set in a range of, for example, 20 kPaG to 40 kPaG. In this state, the pressure on the downstream side of the supply pressure-adjusting valve 32, that is, the pressure of gas being supplied to the main engine 100 is set to, for example, 5 kPaG.

As described above, if the pressure of the boil-off gas of LNG has been increased, and the supply pressure-adjusting valve 32 is opened using the control apparatus 50 when the fuel is switched from LNG to heavy oil or light oil, it is possible to instantly form a large combustion flame for ignition, and to carry out reliable ignition and the reliable switching of fuels.

According to the above-described configuration, it is possible to suppress the useless consumption of the fuel and to reliably switch the fuel from LNG to heavy oil or light oil.

In addition, in the existing marine vessels as well, the same configuration components as described above are provided in terms of hardware. Therefore, only the minimum extent of modification is required by changing the control program for the control apparatus 50, it is possible to obtain the above-described effects at a low cost.

Meanwhile, in the above-described respective embodiments, the invention, for example, the fuel supply apparatuses 10A and 10B according to the invention can also be applied to an LPG vessel or the like in addition to the LNG vessel. In a marine vessel, any configurations are available except for the configurations of the fuel supply apparatuses 10A and 10B. In addition, for the configuration of the respective parts of the fuel supply apparatuses 10A and 10B, other components may be used as long as the components are capable of realizing the same function.

Furthermore, the combination of the first embodiment and the second embodiment is also possible. That is, the vaporizer 61 illustrated in Fig. 2 may be jointly provided to the configuration illustrated in Fig. 1.

### Reference Signs List

- 10A, 10B: FUEL SUPPLY APPARATUS
- 11A, 11B: SUPPLY LINE FOR FUEL GAS OR LNG
- 12: RETURN LINE (CIRCULATION LINE)
- 12a: BRANCHING SECTION
- 12b: CONVERGENCE SECTION
- 13: LNG SUPPLY LINE
- 20: CARGO TANK
- 30: COMPRESSOR
- 31: HEATER
- 32: SUPPLY PRESSURE-ADJUSTING VALVE
- 35: LINE PRESSURE CONTROL VALVE
- 36: MIST SEPARATOR
- 36a: CONTAINER
- 38: PUMP
- 50: CONTROL APPARATUS
- 51: FUEL OIL SUPPLY LINE
- 61: VAPORIZER (PRESSURE-INCREASING COOLING MEANS)
- 100: MAIN ENGINE (MAIN ENGINE FOR PROPULSION)

## Claims

1. A fuel supply apparatus (10A;10B) for supplying a fuel gas of LNG to a main engine (100) for marine vessel propulsion that is capable of selectively using the fuel gas of LNG and a fuel oil as a fuel, the fuel supply apparatus (10A;10B) comprising:
a fuel gas supply line (11A;11B) for supplying the fuel gas of LNG to the main engine (100) for propulsion;
pressure-increasing means (30;12;61) for increasing a pressure of the fuel gas of LNG in the fuel gas supply line (11A;11B);
a supply pressure-adjusting valve (32) for adjusting a supply pressure when supplying the fuel gas of LNG in the fuel gas supply line (11A;11B) to the main engine (100) for marine propulsion; and
a control apparatus (50) arranged to increase the pressure of the fuel gas of LNG using the pressure-increasing means (30;12;61) depending on a load on the main engine (100) for marine vessel propulsion and to open the supply pressure-adjusting valve (32) so as to supply the pressurized fuel gas of LNG to the main engine (100) for marine propulsion before a state in which the fuel gas of LNG is supplied to the main engine (100) for marine vessel propulsion from the fuel gas supply line (11A;11B) is transferred to a state in which the fuel oil is supplied to the main engine (100) for marine vessel propulsion from the fuel oil supply line (51).

2. The fuel supply apparatus (10A) according to Claim 1, wherein the pressure-increasing means includes
a compressor (30) provided on an upper stream side of the supply pressure-adjusting valve (32) and arranged to pressurize the fuel gas of LNG flowing in the fuel gas supply line (11A), and
a circulation line (12) for circulating the fuel gas of LNG to the upper stream side of the compressor (30) from a branching section (12a) between the compressor (30) and the supply pressure-adjusting valve (32).

3. The fuel supply apparatus (10A) according to Claim 2,
wherein a line pressure-adjusting valve (35) for adjusting the pressure of the fuel gas of LNG in the fuel gas supply line (11A) is provided in the circulation line (12).

4. The fuel supply apparatus (10A) according to Claim 2 or 3, further comprising:
cooling means (36) provided on a upper stream side of the compressor (30) and arranged to cool the fuel gas of LNG flowing in the fuel gas supply line (11A).

5. The fuel supply apparatus (10B) according to Claim 1 or 2,
wherein the pressure-increasing means includes an evaporator (61) provided on an upper stream side of the supply pressure-adjusting valve (32) and arranged to increase the pressure of the fuel gas of LNG flowing in the fuel gas supply line (11B).

6. The fuel supply apparatus (10A;10B) according to any one of Claims 1 to 5,
wherein the pressure-increasing means is arranged to extract the LNG from a tank (20) containing the LNG, to gasify the LNG through evaporation, and to supply the gasified LNG to the fuel gas supply line (11A;11B).

7. The fuel supply apparatus (10A;10B) according to any one of Claims 2 to 5,
wherein the control apparatus (50) is capable of not carrying out the pressurization of the fuel gas of LNG using the circulation line (12) or the pressure-increasing means including the evaporator (61) when the load on the main engine (100) for marine vessel propulsion is at a first level, and
is capable of carrying out the pressurization of the fuel gas of LNG using the circulation line (12) or the pressure-increasing means including the evaporator (61) before the state in which the fuel gas of LNG is supplied to the main engine (100) for marine vessel propulsion from the fuel gas supply line (11A;11B) is transferred to the state in which the fuel oil is supplied to the main engine (100) for marine vessel propulsion from the fuel oil supply line (51) when the load on the main engine (100) for marine vessel propulsion is at a second level that is lower than the first level.

8. A marine vessel comprising:
a main engine (100) for marine vessel propulsion capable of selectively using fuel gas of LNG and fuel oil as a fuel;
a fuel oil supply line (51) for supplying the fuel oil to the main engine (100) for marine propulsion; and
a fuel supply apparatus (10A;10B) according to any one of claims 1 to 7.

9. A method for navigating the marine vessel according to Claim 8, comprising:
a step of increasing a pressure of the fuel gas of LNG using the pressure-increasing means (30;12;61) of the fuel supply apparatus (10A;10B) depending on a load on the main engine (100) for marine vessel propulsion before a state in which the fuel gas of LNG is supplied to the main engine (100) for marine vessel propulsion from the fuel gas supply line (11A;11B) is transferred to a state in which the fuel oil is supplied to the main engine (100) for marine vessel propulsion from the fuel oil supply line (51); and
a step of opening the supply pressure-adjusting valve (32) of the fuel supply apparatus (10A;10B) so as to supply the pressurized fuel gas of LNG to the main engine (100) for propulsion and igniting the fuel oil using a flame of the fuel gas of LNG.

10. A method for driving the marine vessel according to Claims 8,
wherein a pressure of the fuel gas of LNG located on the upper stream side of the supply pressure-adjusting valve (32) in the fuel gas supply line (11A;11B) of the fuel supply apparatus (10A;10B) is previously increased, and
the pressurized fuel gas of LNG is supplied to the main engine (100) for marine propulsion.

## Patentansprüche

1. Eine Treibstoffzuführvorrichtung (10A;10B) zum Zuführen eines Treibstoffgases aus LNG zu einer Hauptantriebsmaschine (100) für einen Wasserfahrzeugantrieb, die selektiv das Treibstoffgas aus LNG und ein Treibstoff-Öl als Treibstoff verwenden kann, wobei die Treibstoffzuführvorrichtung (10A;10B) aufweist:
eine Treibstoffgas-Zuführleitung (11A;11B) zum Zuführen des Treibstoffgases aus LNG zu der Hauptantriebsmaschine (100) für den Antrieb;
ein Druckerhöhungsmittel (30;12;61) zum Erhöhen eines Drucks des Treibstoffgases aus LNG in der Treibstoffgas-Zuführleitung (11A;11B),
ein Zuführdruck-Einstellventil (32) zum Einstellen eines Zuführdrucks, wenn das Treibstoffgas aus LNG in der Treibstoffgas-Zuführleitung (11A;11B) zu der Hauptantriebsmaschine (100) für den Wasserfahrzeugantrieb zugeführt wird, und
eine Steuervorrichtung (50), die eingerichtet ist, um den Druck des Treibstoffgases aus LNG unter Verwendung des Druckerhöhungsmittels (30;12;61) in Abhängigkeit von einer Last an der Hauptantriebsmaschine (100) für den Wasserfahrzeugantrieb zu erhöhen und um das Zuführdruck-Einstellventil (32) zu öffnen, so dass das mit Druck beaufschlagte Treibstoffgas aus LNG zu der Hauptantriebsmaschine (100) für den Wasserfahrzeugantrieb geöffnet wird, bevor ein Zustand, bei dem das Treibstoffgas aus LNG der Hauptantriebsmaschine (100) für den Wasserfahrzeugantrieb von der Treibstoffgas-Zuführleitung (11A;11B) zugeführt wird, zu einen Zustand überführt wird, bei dem das Treibstofföl der Hauptantriebsmaschine (100) für den Wasserfahrzeugantrieb von der Treibstofföl-Zuführleitung (51) zugeführt wird.

2. Die Treibstoffzuführvorrichtung (10A) gemäß Anspruch 1, wobei das Druckerhöhungsmittel aufweist
einen Kompressor (30), der an einer stromaufwärtigen Seite des Zuführdruck-Einstellventils (32) vorgesehen ist und eingerichtet ist, um das Treibstoffgas aus LNG, das in der Treibstoffgas-Zuführleitung (11A) strömt, mit Druck zu beaufschlagen, und
eine Zirkulationsleitung (12) zum Zirkulieren des Treibstoffgases aus LNG zu der stromaufwärtigen Seite des Kompressors (30) von einem Verzweigungsabschnitt (12a) zwischen dem Kompressor (30) und dem Zuführdruck-Einstellventil (32).

3. Die Treibstoffzuführvorrichtung (10A) gemäß Anspruch 2,
wobei ein Leitungsdruck-Einstellventil (35) zum Einstellen des Drucks des Treibstoffgases aus LNG in der Treibstoffgas-Zuführleitung (11A) in der Zirkulationsleitung (12) vorgesehen ist.

4. Die Treibstoffzuführvorrichtung (10A) gemäß Anspruch 2 oder 3, ferner mit:
Kühlmitteln (36), die an einer stromaufwärtigen Seite des Kompressors (30) vorgesehen und eingerichtet sind, um das Treibstoffgas aus LNG, das in der Treibstoffgas-Zuführleitung (11A) strömt, zu kühlen.

5. Die Treibstoffzuführvorrichtung (10B) gemäß Anspruch 1 oder 2,
wobei das Druckerhöhungsmittel einen Verdampfer (61) aufweist, der an einer stromaufwärtigen Seite des Zuführdruck-Einstellventils (32) vorgesehen und eingerichtet ist, um den Druck des Treibstoffgases aus LNG, das in der Treibstoffgas-Zuführleitung (11B) strömt, zu erhöhen.

6. Die Treibstoffzuführvorrichtung (10A;10B) gemäß einem der Ansprüche 1 bis 5,
wobei das Druckerhöhungsmittel eingerichtet ist, um das LNG von einem Tank (20), der das LNG enthält, zu extrahieren, um das LNG durch Verdampfung zu vergasen, und das vergaste LNG der Treibstoffgas-Zuführleitung (11A;11B) zuzuführen.

7. Die Treibstoffzuführvorrichtung (10A;10B) gemäß einem der Ansprüche 2 bis 5,
wobei die Steuervorrichtung (50) fähig ist, die Druckbeaufschlagung des Treibstoffgases aus LNG unter Verwendung der Zirkulationsleitung (12) oder des Druckerhöhungsmittels mit dem Verdampfer (61) nicht auszuführen, wenn die Last an der Hauptantriebsmaschine (100) für den Wasserfahrzeugantrieb sich an einem ersten Wert befindet, und
die Druckbeaufschlagung des Treibstoffgases aus LNG unter Verwendung der Zirkulationsleitung (12) oder des Druckerhöhungsmittels mit dem Verdampfer (61) auszuführen, bevor der Zustand, bei dem das Treibstoffgas aus LNG der Hauptantriebsmaschine (100) für den Wasserfahrzeugantrieb von der Treibstoffgas-Zuführleitung (11A;11B) zugeführt wird, in den Zustand überführt wird, bei dem das Treibstofföl der Hauptantriebsmaschine (100) für den Wasserfahrzeugantrieb von der Treibstofföl-Zuführleitung (51) zugeführt wird, wenn die Last an der Hauptantriebsmaschine (100) für den Wasserfahrzeugantrieb sich an einem zweiten Wert befindet, der niedriger ist als der erste Wert.

8. Ein Wasserfahrzeug mit :
einer Hauptantriebsmaschine (100) für einen Wasserfahrzeugantrieb, die fähig ist, Treibstoffgas aus LNG und Treibstofföl selektiv als Treibstoff zu verwenden,
einer Treibstofföl-Zuführleitung (51) zum Zuführen des Treibstofföls zu der Hauptantriebsmaschine (100) für Wasserfahrzeugantrieb, und
eine Treibstoffzuführvorrichtung (10A;10B) gemäß einem der Ansprüche 1 bis 7.

9. Ein Verfahren zum Navigieren des Wasserfahrzeugs gemäß Anspruch 8, mit:
einem Schritt des Erhöhens des Drucks des Treibstoffgases aus LNG unter Verwendung des Druckerhöhungsmittels (30;12;61) der Treibstoffzuführvorrichtung (10A;10B) abhängig von einer Last an der Hauptantriebsmaschine (100) für den Wasserfahrzeugantrieb bevor ein Zustand, bei dem Treibstoffgas aus LNG der Hauptantriebsmaschine (100) für den Wasserfahrzeugantrieb von der Treibstoffgaszuführleitung (11A;11B) zugeführt wird, zu einem Zustand überführt wird, bei dem das Treibstofföl der Hauptantriebsmaschine (100) für den Wasserfahrzeugantrieb von der Treibstofföl-Zuführleitung (51) zugeführt wird, und
einem Schritt des Öffnens des Zuführdruck-Einstellventils (32) der Treibstoffzuführvorrichtung (10A;10B), um das mit Druck beaufschlagte Treibstoffgas aus LNG der Hauptantriebsmaschine (100) für den Antrieb zuzuführen und das Treibstofföl unter Verwendung einer Flamme des Treibstoffgases aus LNG zu zünden.

10. Ein Verfahren zum Fahren des Wasserfahrzeugs gemäß Anspruch 8,
wobei ein Druck des Treibstoffgases aus LNG, das sich an der stromaufwärtigen Seite des Zuführdruck-Einstellventils (32) in der Treibstoffgas-Zuführleitung (11A;11B) der Treibstoffzuführvorrichtung (10A;10B) befindet, zuvor erhöht wird, und
das mit Druck beaufschlagte Treibstoffgas aus LNG der Hauptantriebsmaschine (100) für den Wasserfahrzeugantrieb zugeführt wird.

## Revendications

1. Installation (10A; 10B) d'alimentation en combustible pour fournir un combustible gazeux de gaz naturel liquéfié à un moteur (100) principal de propulsion d'un bâtiment de navigation marin, qui est apte à utiliser sélectivement le gaz combustible de gaz naturel liquéfié et un mazout comme combustible, l'installation (10A; 10B) d'alimentation en combustible comprenant :
une ligne (11A; 11B) d'alimentation en combustible gazeux pour envoyer le combustible gazeux de gaz naturel liquéfié au moteur (100) principal en vue de la propulsion ;
des moyens (30; 12; 61) d'augmentation de la pression du combustible gazeux de gaz naturel liquéfié dans la ligne (11A; 11B) d'alimentation en combustible gazeux ;
une vanne (32) de réglage de la pression d'alimentation pour régler une pression d'alimentation, lorsqu'on envoie le combustible gazeux de gaz naturel liquéfié de la ligne (11A; 11b) d'alimentation en combustible gazeux au moteur (100) principal en vue d'une propulsion marine et
un dispositif (50) de commande agencé pour augmenter la pression du combustible gazeux de gaz naturel liquéfié en utilisant les moyens (30; 12; 61) d'augmentation de la pression en fonction d'une charge sur le moteur (100) principal, en vue d'une propulsion d'un bâtiment de navigation marin, et pour ouvrir la vanne (32) de réglage de la pression d'alimentation, de manière à fournir le combustible gazeux sous pression de gaz naturel liquéfié au moteur (100) principal, en vue d'une propulsion marine, avant un état dans lequel le combustible gazeux de gaz naturel liquéfié est envoyé au moteur (100) principal, pour une propulsion d'un bâtiment de navigation marin, de la ligne (11A; 11B) d'alimentation en combustible gazeux, passe à un état dans lequel le mazout est envoyé au moteur (100) principal en vue d'une propulsion d'un bâtiment de navigation marin, à partir de la ligne (51) d'alimentation en mazout.

2. Installation (10A) d'alimentation en combustible suivant la revendication 1, dans laquelle les moyens d'augmentation de la pression comprennent
un compresseur (30) prévu d'un côté en amont de la vanne (32) de réglage de la pression d'alimentation et agencé pour pressuriser le combustible gazeux de gaz naturel liquéfié passant dans la ligne (11A) d'alimentation en combustible gazeux et
une ligne (12) de circulation pour faire circuler le combustible gazeux de gaz naturel liquéfié vers le côté en amont du compresseur (30) à partir d'une section (12A) de ramification entre le compresseur (30) et la vanne (32) de réglage de la pression d'alimentation.

3. Installation (10A) d'alimentation en combustible suivant la revendication 2,
dans laquelle il est prévu, dans la ligne (12) de circulation, une vanne (35) de réglage de la pression pour réguler la pression du combustible gazeux de gaz naturel liquéfié dans la ligne (11A) d'alimentation en combustible gazeux.

4. Installation (10A) d'alimentation en combustible suivant la revendication 2 ou 3, comprenant, en outre :
des moyens (36) de refroidissement prévus en amont du compresseur (30) et agencés pour refroidir le combustible gazeux de gaz naturel liquéfié passant dans la ligne (11A) d'alimentation en combustible gazeux.

5. Installation (10B) d'alimentation en combustible suivant la revendication 1 ou 2,
dans laquelle les moyens d'augmentation de la pression comprennent un évaporateur (61) prévu en amont de la vanne (32) de réglage de la pression d'alimentation et agencés pour augmenter la pression du combustible gazeux de gaz naturel liquéfié passant dans la ligne (11B) d'alimentation en combustible gazeux.

6. Installation (10A; 10B) d'alimentation en combustible suivant l'une quelconque des revendications 1 à 5,
dans laquelle les moyens d'augmentation de la pression sont agencés pour extraire le gaz naturel liquéfié d'une cuve (20) contenant le gaz naturel liquéfié pour gazéifier le gaz naturel liquéfié par évaporation et pour envoyer le gaz naturel liquéfié gazéifié à la ligne (11A; 11B) d'alimentation en combustible gazeux.

7. Installation (10A; 10B) d'alimentation en combustible suivant l'une quelconque des revendications 2 à 5,
dans laquelle le dispositif (50) de commande est apte à ne pas effectuer la mise sous pression du combustible gazeux de gaz naturel liquéfié en utilisant la ligne (12) de circulation ou les moyens d'augmentation de la pression comprenant l'évaporateur (61), lorsque la charge sur le moteur (100) principal en vue d'une propulsion d'un bâtiment de navigation marin est à un premier niveau et
est apte à effectuer la mise sous pression du combustible gazeux de gaz naturel liquéfié en utilisant la ligne (12) de circulation ou les moyens d'augmentation de la pression comprenant l'évaporateur (61), avant que l'état dans lequel le combustible gazeux de gaz naturel liquéfié est envoyé au moteur (100) principal, en vue d'une propulsion d'un bâtiment de navigation marin, à partir de la ligne (11A; 11B) d'alimentation en combustible gazeux passe à l'état dans lequel le mazout est envoyé au moteur (100) principal, en vue d'une propulsion d'un bâtiment de navigation marin, à partir de la ligne (51) d'alimentation en mazout, lorsque la charge sur le moteur (100) principal, en vue d'une propulsion d'un bâtiment de navigation marin, est à un deuxième niveau qui est plus bas que le premier niveau.

8. Bâtiment de navigation marin comprenant :
un moteur (100) principal en vue d'une propulsion d'un bâtiment de navigation marin apte à utiliser sélectivement du combustible gazeux de gaz naturel liquéfié et du mazout comme combustible ;
une ligne (51) d'alimentation en mazout pour envoyer le mazout au moteur (100) principal en vue d'une propulsion marine et
une installation (10A; 10B) d'alimentation en combustible suivant l'une quelconque des revendications 1 à 7.

9. Procédé pour faire naviguer le bâtiment de navigation marin suivant la revendication 8, comprenant :
un stade d'augmentation de la pression du combustible gazeux de gaz naturel liquéfié, en utilisant les moyens (30; 12; 61) d'augmentation de la pression de l'installation (10A; 10B) d'alimentation en combustible en fonction d'une charge sur le moteur (100) principal, en vue d'une propulsion d'un bâtiment de navigation marin, avant qu'un état dans lequel le combustible gazeux de gaz naturel liquéfié est envoyé au moteur (100) principal, en vue d'une propulsion d'un bâtiment de navigation marin à partir de la ligne (11A; 11B) d'alimentation en combustible gazeux passe à un état dans lequel le mazout est envoyé au moteur (100) principal, en vue d'une propulsion d'un bâtiment de navigation marin, à partir de la ligne (51) d'alimentation en mazout et
un stade d'ouverture de la vanne (32) de réglage de la pression d'alimentation de l'installation (10A; 10B) d'alimentation en combustible, de manière à fournir le gaz combustible mis sous pression de gaz naturel liquéfié au moteur (100) principal pour une propulsion et l'allumage du mazout en utilisant une flamme du combustible gazeux de gaz naturel liquéfié.

10. Procédé de conduite du bâtiment de navigation marin suivant la revendication 8,
dans lequel on augmente au préalable une pression du combustible gazeux de gaz naturel liquéfié en amont de la vanne (32) d'ajustement de la pression d'alimentation dans la ligne (11A; 11B) d'alimentation en combustible gazeux de l'installation (10A; 10B) d'alimentation en combustible et
on envoie du combustible gazeux mis sous pression de gaz naturel liquéfié au moteur (100) principal pour une propulsion marine.
